# EUROPEAN PATENT APPLICATION

(11) **EP 2 613 523 A2**
(43) Date of publication of application: **10.07.2013**
(21) Application number: 13150364.1
(22) Date of filing: 07.01.2013
(51) Int. Cl.: H04N 5/445

(54) **Display apparatus and control method thereof**

(30) Priority: 09.01.2012 KR 20120002411
(71) Applicant: Samsung Electronics Co., Ltd, Gyeonggi-do 443-742 (KR)
(72) Inventor: Lee, Dong-heon, Seoul (KR); Kwon, Yong-hwan, Gyeonggi-do (KR)
(74) Representative: Walaski, Jan Filip

(57) **Abstract**

A display apparatus includes a display which displays an image based on an image signal, and a controller which controls the display unit to display a list of channel numbers which have been previously input, upon receiving a user's input to input a channel number. Thus, the display apparatus displays a list of channel numbers which have been previously input by a user, at the time of selection of a channel, thereby improving user's convenience in selecting channels.

## Description

The present invention relates to a display apparatus and a control method thereof, and more particularly, to a display apparatus and a control method thereof which displays a result of a user's input.

A display apparatus processes image signals and/or image data transmitted by various external image supply sources or stored in the display apparatus to display an image on a display panel. For example, a display apparatus may include a television (TV) or a monitor. The TV processes a broadcasting signal transmitted from the outside through various image processing operations such as decoding and scaling operations and provides an image of a desired broadcasting channel.

A user may select a desired channel by manipulating a user input unit such as a remote controller. For example, a user selects a channel by manipulating a number keypad in the remote controller and inputting a desired channel (content) number.

However, there is an increasing number of channels as contents are becoming more diverse, and it may be difficult for a user to memorize each channel number. Moreover, a remote controller which includes a touch sensor has a small number of buttons, e.g., 2 to 4 buttons without a number keypad. Thus, a user may need to conduct many steps of complex manipulation to select a desired channel.

Exemplary embodiments may address at least the above problems and/or disadvantages and other disadvantages not described above.

According to an aspect of an exemplary embodiment, there is provided a display unit apparatus including an image processor which processes an image signal, a display unit which displays an image thereon based on the processed image signal, and a controller which controls the display unit to display thereon a list of channel numbers which have been input previously, upon receiving a user's input to input a channel number.

The controller may control the display unit to add to the list of channel numbers and display the input channel number if a predetermined channel number is input and a user's input selecting the input channel is received.

The user's input to input the channel number may include selecting one of the channel numbers displayed in the list of channel numbers.

The display unit may further display thereon a user interface (UI) including a number keypad to input the channel number, and the user's input to input the channel number may include selecting at least one of numbers included in the number keypad.

The display unit apparatus may further include a user input unit which includes a number keypad to input the channel number, and the user's input to input the channel number may include selecting at least one of numbers included in the number keypad.

The display unit may display the list of channel numbers according to one of standards including a descending order, an ascending order and a date of selection of channel.

The controller may display the channel number selected for a predetermined period, as the list of channel numbers.

According to another aspect of an exemplary embodiment, there is provided a control method of a display unit apparatus including receiving a user's input to input a channel number, and displaying a list of channel numbers which have been input previously.

The control method may further include inputting a predetermined channel number, receiving a user's input to select the input channel, and adding to the list of channel numbers and displaying the input channel number.

The control method may further include selecting one of channel numbers displayed in the list of channel numbers.

The control method may further include displaying a UI including a number keypad to input the channel number, and the user's input to input the channel number may include selecting at least one of numbers included in the number keypad.

The display unit apparatus may further include a user input unit including a number keypad to input a channel number, and the user's input to input the channel number may include selecting at least one of numbers included in the number keypad.

The displaying the list of channel numbers may include arranging and displaying the list of channel numbers according to one of standards including a descending order, an ascending order and a date of selection of channel.

The displaying the list of channel numbers may include displaying a channel number selected for a predetermined period, as the list of channel numbers.

The above and/or other aspects will become more apparent by describing certain exemplary embodiments, with reference the accompanying drawings, in which:
FIG. 1 is a block diagram of a display apparatus according to an exemplary embodiment;
FIG. 2 illustrates a screen displayed on a display unit of the display apparatus according to an exemplary embodiment;
FIG. 3 illustrates a screen displayed on a display unit of the display apparatus according to an exemplary embodiment;
FIG. 4 illustrates a screen displayed on a display unit of the display apparatus according to an exemplary embodiment;
FIG. 5 illustrates a screen displayed on a display unit of the display apparatus according to an exemplary embodiment;
FIG. 6 illustrates a screen displayed on a display unit of the display apparatus according to an exemplary embodiment;
FIG. 7 illustrates a screen displayed on a display unit of the display apparatus according to an exemplary embodiment;
FIG. 8 illustrates a screen displayed on a display unit of the display apparatus according to an exemplary embodiment;
FIG. 9 illustrates a flowchart showing a control method of the display apparatus according to an exemplary embodiment; and
FIG. 10 illustrates a flowchart showing a control method of the display apparatus according to an exemplary embodiment.

Below, certain exemplary embodiments are described in greater detail with reference to accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be carried out without those specifically defined matters. Also, well-known functions or constructions are not described in detail since that would obscure the description with unnecessary detail.

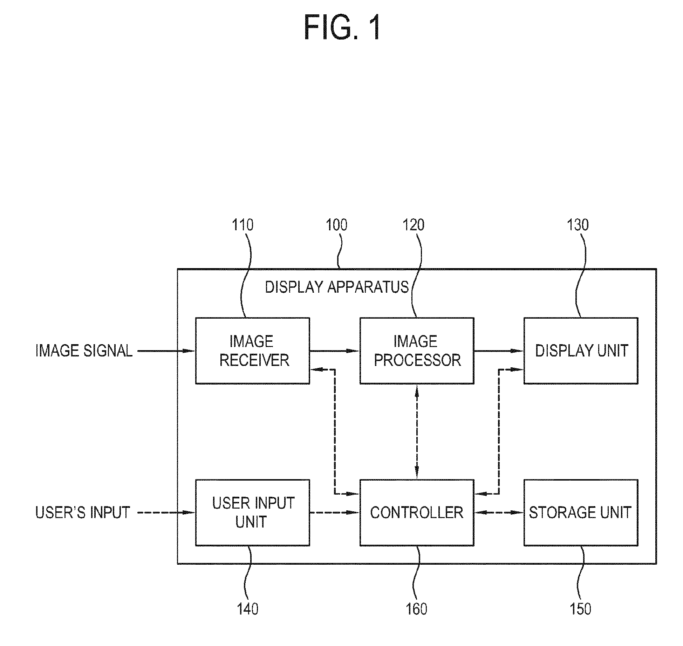

FIG. 1 is a block diagram of a display apparatus 100 according to an exemplary embodiment.

As shown therein, the display apparatus 100 processes an image signal supplied by an external image supply source (not shown) according to a preset image processing operation, and displays an image based on the processed image signal.

The display apparatus 100 according to the present exemplary embodiment includes a TV which displays a broadcasting image based on broadcasting signals, broadcasting information and/or broadcasting data transmitted by a transmission device of a broadcasting station. However, an exemplary embodiment is not limited to a type of the display apparatus 100, and may include various types of image displays.

The type of an image which is displayable by the display apparatus 100 is not limited to a broadcasting signal. For example, the display apparatus 100 may display video, still images, applications and on-screen display (OSD) based on signals and/or data supplied by various image supply sources, and a graphic user interface (GUI) for controlling various operations, but not limited thereto.

As shown therein, the display apparatus 100 includes an image receiver 110 which receives an image signal, an image processor 120 which processes an image signal received by the image receiver 110, a display unit 130 which displays thereon an image based on the image signal processed by the image processor 120, a user input unit 140 which receives a user's input, a storage unit 150 which stores therein various data, and a controller 160 which controls the display apparatus 100.

The image receiver 110 receives and transmits an image signal to the image processor 120. The image receiver 110 may vary depending on a standard of a received image signal and the embodiment type of the display apparatus 100. For example, the image receiver 110 may receive a radio frequency (RF) signal in a wireless manner from a broadcasting station (not shown), or image signals in a wired manner according to standards such as composite video, component video, super video, SCART, high definition multimedia interface (HDMI), etc. The image receiver 110 may include a tuner to tune a broadcasting signal by channel if the image signal includes a broadcasting signal.

The image signal may be input from the outside, e.g., from an external device such as a personal computer (PC), AV device, smart phone, smart pad, etc. The image signal may result from data which are received through a network such as the Internet. In this case, the display apparatus 100 may further include a network communication unit (not shown) which communicates through a network. The image signal may result from data stored in a non-volatile storage unit 150 such as a flash memory, a hard disc drive, etc. The storage unit 150 may be provided within/outside the display apparatus 100. If the storage unit 150 is provided outside the display apparatus 100, the display apparatus 100 may further include a connector (not shown) to which the storage unit 150 is connected.

The image processor 120 performs preset various image processing operations with respect to an image signal. The image processor 120 outputs the processed image signal to the display unit 130 to display an image on the display unit 130 based on the image signal.

The image processing operations of the image processor 120 may include a decoding operation corresponding to various image formats, a de-interlacing operation, a frame refresh rate conversion operation, a scaling operation, a noise reduction operation to improve an image quality, a detail enhancement operation, and a line scanning operation, but not limited thereto. The image processor 120 may include a group of individual elements which may individually perform the foregoing operations, or a system-on-chip (SoC) which integrates such operations.

The display unit 130 displays thereon an image based on an image signal processed by the image processor 120. The display unit 130 may include liquid crystal, plasma, light-emitting diode, organic light-emitting diode, surface-conduction electron-emitter, carbon nano-tube, and nano-crystal, but not limited thereto.

The display unit 130 may further include additional elements depending on its embodiment type. For example, if the display unit 130 includes liquid crystal, it may further include a liquid crystal display (LCD) panel (not shown), a backlight (not shown) emitting light to the LCD panel, and a panel driving substrate (not shown) driving the LCD panel.

The user input unit 140 transmits preset various control commands and/or information to the controller 160 by a user's manipulation and input. The user input unit 140 may include an input panel including a menu key and a keypad and installed in an external side of the display apparatus 100 or may include a remote controller that is separated from the display apparatus 100. There is no restriction in apparatuses and methods when transmitting a user's input from the user input unit 140 to the controller 160, and a wireless communication may be used. The wireless communication includes infrared communication, RF communication, etc. In this case, the display apparatus 100 may further include a communication module (not shown) which receives a signal corresponding to a user's input from the user input unit 140 and transmits the signal to the controller 160.

The user input unit 140 which includes a remote controller may include a touch sensor which receives a user's touch input. A user's touch input may vary including tap, click which is stronger than tap, double click, drag, slide, and flicking.

The user input unit 140 which includes a remote controller may include a pointing device in which a motion sensor is mounted. The motion sensor includes a gyro sensor, an angular velocity sensor, and a terrestrial magnetic sensor. The remote controller calculates motion information based on a motion result of the motion sensor and transmits a corresponding command to the display apparatus 100.

The user input unit 140 which includes a remote controller may include various menu keypads, number keypads, and direction keys (four-direction buttons) which may be manipulated by a user.

The user input unit 140 may include a user interface (UI) which is displayed for making a selection by a user. If the display unit 130 includes a touch screen, the user input unit 140 may transmit to the controller 160 a command corresponding to a user's input generated by a user touching a UI of the display unit 130.

A user may manipulate a direction key or a touch sensor of the remote controller and select a UI displayed on the display unit 130. According to an exemplary embodiment, a user manipulates the remote controller as the user input unit 140 and selects a UI displayed on the display unit 130. However, this is not limiting, and may include other various embodiments which are performed by various user's inputs other than the remote controller.

The storage unit 150 stores data according to a control of the controller 160. The storage unit 150 includes a non-volatile storage medium such as a flash memory and a hard disc drive. The storage unit 150 is accessed by the controller 160, and data are read, recorded, amended, deleted, and/or updated by the controller 160.

The data stored in the storage unit 150 include an operating system for driving the display apparatus 100, and other various applications, which are executed in the operating system, image data and additional data.

The storage unit 150 according to an exemplary embodiment stores information regarding a channel number that has been previously selected by a user. The stored information regarding the previous channel number or numbers is displayed on the display unit 130 in a list of channel numbers according to a control of the controller 160 corresponding to a user's input to input the channel numbers.

The controller 160 performs control operations for various elements of the display apparatus 100. For example, the controller 160 controls entire operations of the display apparatus 100 by controlling the image processor 120 to process an image and by performing a control operation corresponding to a command of the user input unit 140.

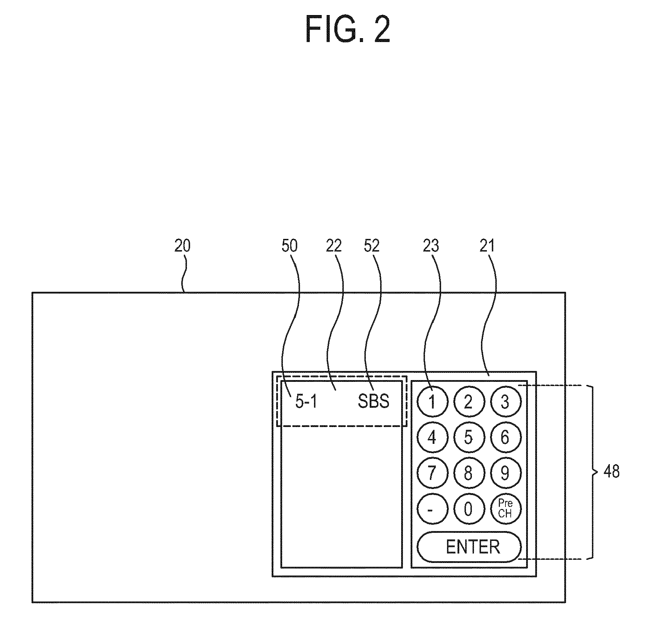

More specifically, referring to FIG. 2, upon receiving a user's input from the user input unit 140 to input a channel number, the controller 160 controls the display unit 130 to display thereon a list 22 of channel numbers which have been previously input through the user input unit 140.

FIGS. 2 to 8 illustrate a screen 20 displayed on the display unit 130.

As shown in FIGS. 2 to 5, 7, and 8, upon receiving a user's input (e.g. selection of a channel number input function) from the user input unit 140 to input a channel number, the controller 160 controls the display unit 130 to display on the screen 20 a channel selection UI 21, such as an OSD, including a number keypad to select a channel number and the list 22 of channel numbers which have been input previously input through the user input unit 140.

A user may select a button provided in the remote controller, e.g. at least one of a channel selection menu key or a number keypad, to input a channel number or perform a designated motion, such as a touch input to touch the touch sensor at a predetermined distance or in predetermined frequencies, or an input of a motion accompanying motion performed at a predetermined distance or in predetermined frequencies, to select the channel number input function. The display apparatus 100 may receive a user's manipulation of a button or a panel installed in an external side of the display apparatus 100 or a user's touch input to the touch screen to select the channel number input function.

As shown therein, the list 22 of channel numbers displays the channel number 50 and the channel name 52, selected recently by a user, in a list. The items displayed in the list 22 of channel numbers are not limited to the channel number and channel name, and may further include various information which enables a user to have more convenience in selecting a channel such as the type of an image including high definition television (HDTV), or 3D.

FIG. 2 illustrates the list 22 of channel number displaying a single channel. However, the list 22 of channel number according to an exemplary embodiment may display a plurality of channels. To prevent the list 22 of channel numbers from displaying too many channels, the controller 160 may control the display unit 130 to display channels which have been selected for some recent predetermined time period, such as for example, two weeks, in the list of channel numbers.

The controller 160 may control the display unit 130 to arrange and display the list of channel numbers according to a predetermined criteria. The predetermined criteria may include a channel number ascending order, a channel number descending order, and/or a date of selection of a channel, such as for example, the most recently selected channel may be displayed on a top of the list.

The channel selection UI 21 which is provided for selecting a channel number includes various types of OSDs including numbers, letters and icons displaying graphic as shown in FIG. 2. Letters include various languages including Korean, English, Chinese, etc.

In an exemplary embodiment, the channel selection UI 21 and the list 22 of channel numbers are displayed in an area of the screen 20, such as in a right side of the screen 20. However, this is not limited thereto, and the channel selection UI 21 and the list 22 of channel numbers may be displayed in various locations such as left side, top, bottom and external side of the screen 20. Also, the channel selection UI 21 and the list 22 of channel numbers may be arranged in a transverse direction, vertical direction or a combination of transverse and vertical directions, a circular shape, a grid or other various shapes.

A user may manipulate the user input unit 140 and select one of channel numbers displayed on the list 22 of channel numbers.

The display apparatus 100 according to an exemplary embodiment enables a user to easily select a channel from the list 22 of channel numbers, improving user's convenience in selecting channels. That is, even if there are too many channels as a result of providing diverse contents, channels frequently selected by a user are limited and only these channels may be displayed. Thus, a user may easily select a desired channel from the list without inputting each channel number every time.

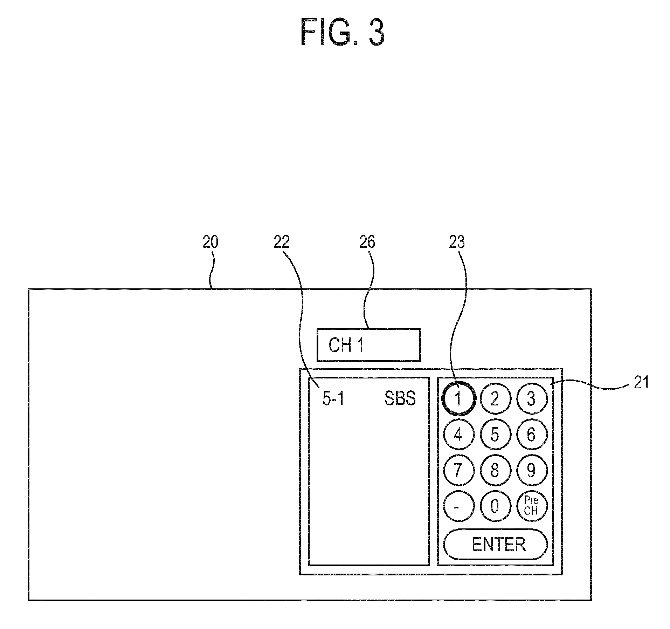

A user may input a channel number by using the channel selection UI 21 including a number keypad, as shown in FIG. 3, rather than selecting a channel from the list 22 of channel numbers. A user may input a channel number by using a button such as a number keypad or direction key of the remote controller or by using an input panel of the display apparatus 100.

More specifically, a user may select a first item 23 of number icons 48 of the channel selection UI 21 through the user input unit 140. The controller 160 may highlight and display the item selected through the user input unit 140, for example, the first item 23, as shown in FIG. 3. In an exemplary embodiment, the selected item 23 is given focus by a highlight, but the highlight is not limited thereto and focus may include pointer, cursor, flickering, etc.

The controller 160 controls the display unit 130 to display on a display window 26 a channel selection result corresponding to the selected first item 23. The display window 26 may be a predetermined type of field, such as an input field, displaying a result of a user's input.

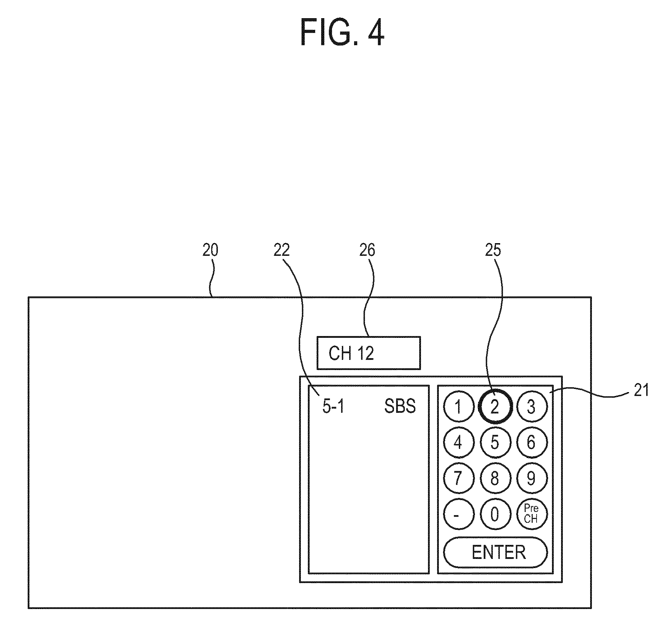

Upon receiving a user's input from the user input unit 140 to select a second item 25 which is different from the first item 23 while the first item 23 is selected, the controller 160 controls the display unit 130 to display on the display window 26 a combination result of the first and second items 23 and 25, as shown in FIG. 4. For example, if the first item 23 is a number 1 icon and the second item 24 is a number 2 icon, the display window 26 displays a channel selection CH 12 obtained by a combination channel number of the two selected icons.

The controller 160 controls the display unit 130 to initially highlight and display the first item 23 corresponding to the initial selection of the first item 23, as shown in FIG. 3, and controls the display unit 130 to highlight and display the subsequently selected second item 25, as shown in FIG. 4, rather than highlighting and displaying the first item 23 when the second item 25 is selected.

Accordingly, an exemplary embodiment moves and displays a focus as a highlight according to a user's selection and enables a user to easily recognize what the currently selected item is.

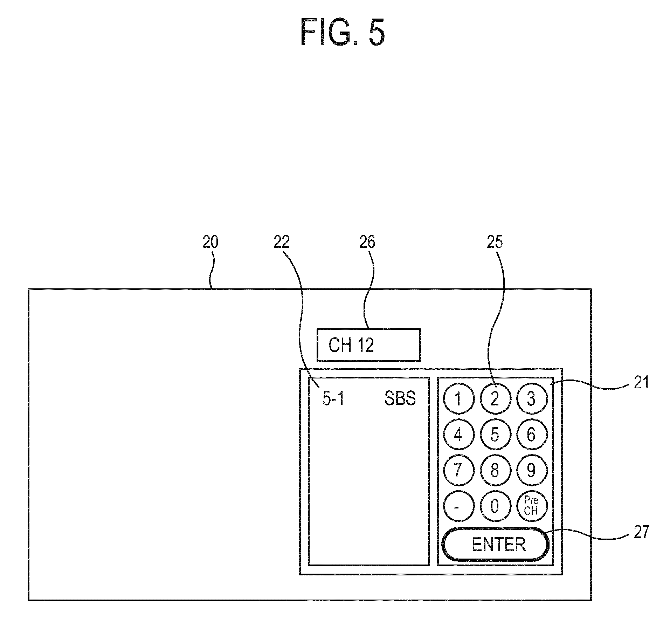

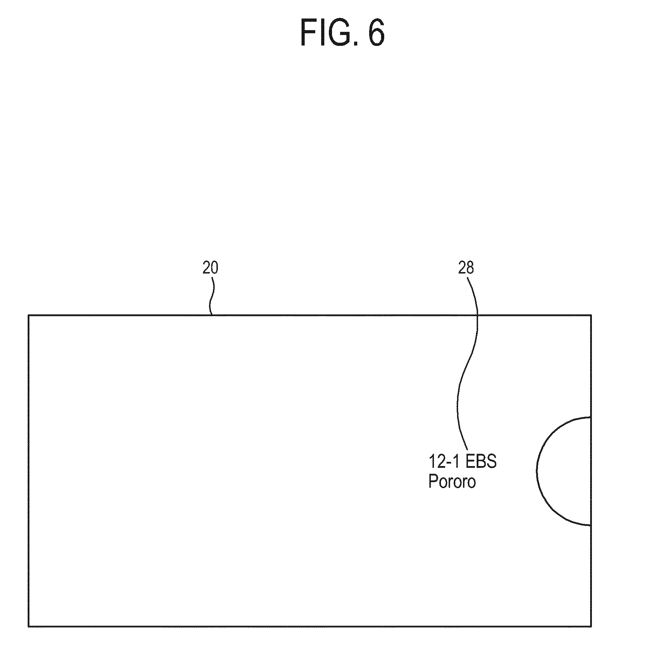

A user may select an ENTER icon 27 for identification, as shown in FIG. 5, after the channel number is input. If the ENTER icon 27 is selected, the controller 160 determines that the input of the channel number is completed, and controls the image receiver 110 to receive an image signal corresponding to the selected channel, controls the image processor 120 to process the received image signal and controls the display unit 130 to display an image corresponding to the processed image signal, as shown in FIG. 6. The controller 160 may control the display unit 130 to further display an icon 28 to display a selected channel and a content supplied by the selected channel.

Even if a user does not select the ENTER icon 27 after inputting the channel number, the controller 160 may automatically select the channel, receive and process the image signal and display a corresponding image if a predetermined time after the user's input elapses.

The controller 160 adds the selected channel 12-1 EBS to the recent channel information of the storage unit 150.

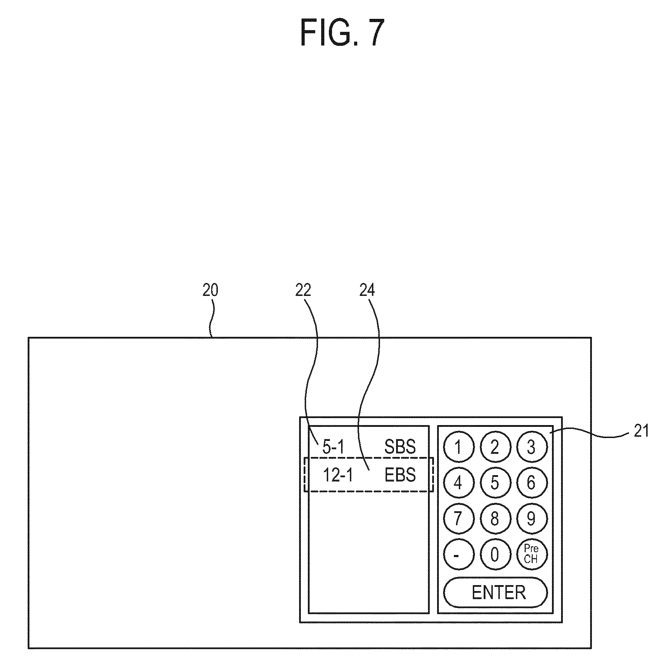

Upon receiving a user's input for the selection of the channel function from the user input unit 140, the controller 160 reads the recent channel information from the storage unit 150, and controls the display unit 130 to display the list of channel numbers 22 as shown in FIG. 7, based on the read information. If the list 22 of channel numbers in FIG. 7 is compared with the list 22 of channel numbers in FIG. 2, that the newly selected channel 12-1 EBS has been added thereto and is displayed as an entry 24 in the list 22.

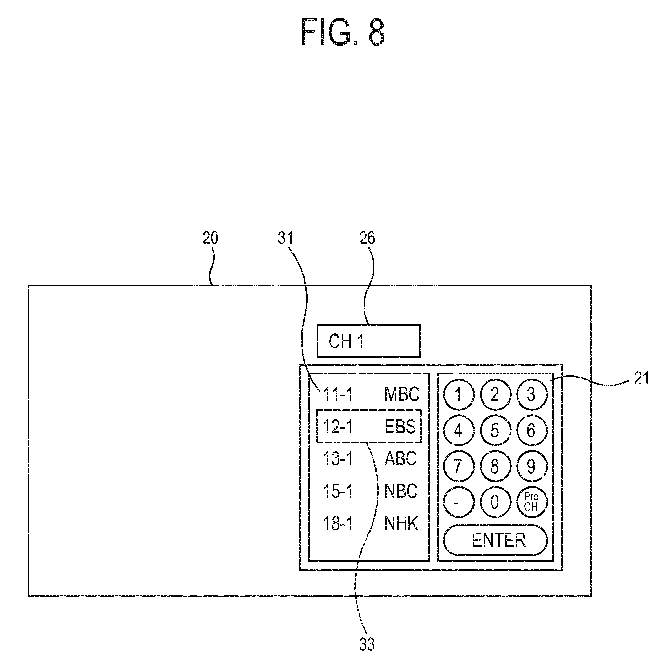

In an exemplary embodiment in which the channel number is input by using the number icons 48, as illustrated in FIGS. 3 and 4, the controller 160 of the display apparatus 100 according to an exemplary embodiment may control the display unit 130 to display an automatic completion list 31 of a channel starting with the input channel number, as shown in FIG. 8.

For example, referring to FIG. 8, if a user selects the first item, i.e. the number 1 icon 23, an input result as CH 1 is displayed and the automatic completion list 31 starting with the input channel number 1 is displayed in the display window 26.

In an exemplary embodiment, the automatic completion list 31 is displayed instead of the list 22 of channel numbers and is displayed together with the channel selection UI 21 for selecting the channel number. The location in which the automatic completion list 31 is displayed is not limited, and the list 22 of channel numbers and the automatic completion list 31 may be displayed together.

A user may manipulate the user input unit 140 and select one of the channels displayed in the automatic completion list 31. The controller 160 controls the image receiver 110 to receive an image signal in response to a selection of an entry 33 corresponding to the selected channel 12-1 EBS, as shown in FIG. 6, controls the image processor 120 to process the received image signal and controls the display unit 130 to display an image corresponding to the processed image signal. The controller 160 may control the display unit 130 to further display an icon 28 displaying the selected channel number and a content supplied by the selected channel.

Hereinafter, a control method of the display apparatus 100 according to an exemplary embodiment will be described with reference to accompanying drawings.

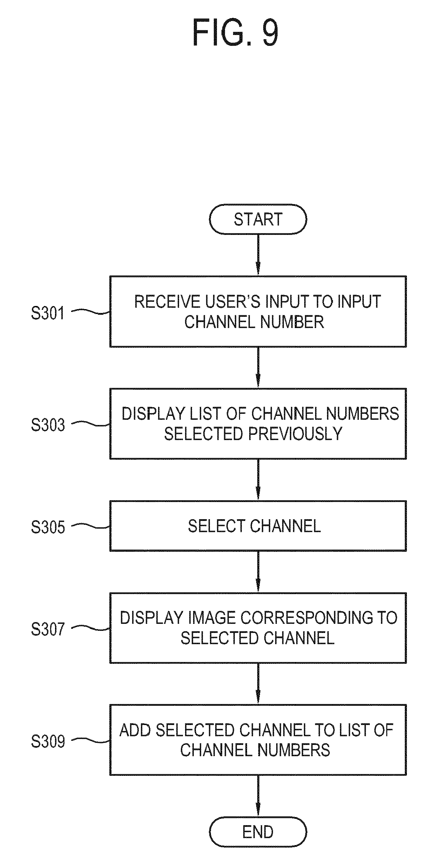

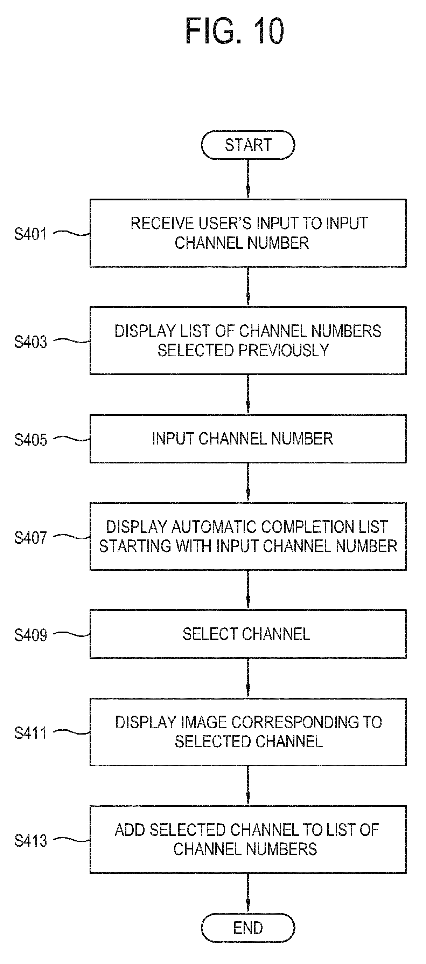

FIGS. 9 and 10 are flowcharts showing a control method of the display apparatus 100 according to an exemplary embodiment.

As shown in FIG. 9, when a user manipulates the user input unit 140 such as a remote controller, a user's input to input the channel number is received (S301).

The controller 160 controls the display unit 130 to display the list 22 of channel numbers which have been previously selected through the user input 160 (S303). The controller 160 may read the recent channel information from the storage unit 150 and control the display unit 130 to display the list 22 of channel numbers corresponding to the read recent channel information.

A user selects one of channels from the displayed list of channel numbers, inputs a channel number through the channel selection UI 21 or the number keypad. Thus, a channel number of a desired channel is input and/or selected (S305).

In operation S307, the controller 160 controls the display unit 130 to display an image corresponding to the channel selected in operation S305. For example, the controller 160 controls the image receiver 110, the image processor 120 and the display unit 130 to receive and process the image signal of the channel number and to display an image corresponding to the processed image signal.

The channel selected at operation S305 is stored in the previous channel information in the storage unit 150, and is added to the list 22 of channel numbers which have been input and selected previously and will be displayed corresponding to a subsequent selection of the channel function.

The exemplary embodiment of FIG. 10 is different from the exemplary embodiment of FIG. 9 as the automatic completion list 31 is displayed.

As shown in FIG. 10, a user may manipulate the user input unit 140, such as a remote controller, to input a channel number (S401).

The controller 160 controls the display unit 130 to display the list 22 of channel numbers which have been previously selected through the user input 160 (S403). The controller 160 may read the recent channel information from the storage unit 150 and control the display unit 130 to display the list 22 of channel numbers corresponding to the recent channel information.

A user inputs the channel number through the channel selection UI 21 (S405).

In operation S407, the controller 160 controls the display unit 130 to display the automatic completion list 31 starting with the channel number input in operation S405.

In operation S409, user selects a desired channel by selecting one of channels from the automatic completion list 31 displayed in operation S407.

The controller 160 controls the display unit 130 to display an image corresponding to the selected channel (S411). For example, the controller 160 controls the image receiver 110, the image processor 120 and the display unit 130 to receive and process the image signal of the channel number and to display an image corresponding to the processed image signal.

The channel selected in operation S409 is stored in the previous channel information in the storage unit 150, and is added to the list 22 of channel numbers which will be displayed corresponding to a subsequent selection of the channel function (S413).

As described above, a display apparatus and a control method thereof according to an exemplary embodiment displays a list of channel numbers which have been previously input by a user, at the time of a selection of a channel, and displays an automatic completion list starting with the input channel number to thereby improve user's convenience in selecting channels.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
an image processor which processes an image signal;
a display unit which displays an image thereon based on the processed image signal; and
a controller which controls the display unit to display thereon a list of channel numbers which have been previously input, upon receiving a user's input to input a channel number.

2. The display apparatus according to claim 1, wherein the controller controls the display unit to add to the list of channel numbers and display the input channel number when the user's input selecting the channel number is received.

3. The display apparatus according to claim 1 or 2, wherein the user's input to input the channel number comprises selecting one of channel numbers displayed in the list of channel numbers.

4. The display apparatus according to one of claims 1 to 3, wherein the display unit further displays thereon a user interface UI comprising a number keypad to input the channel number, and the user's input to input the channel number comprises selecting at least one of numbers in the number keypad.

5. The display apparatus according to one of claims 1 to 3, further comprising a user input unit which comprises a number keypad to input the channel number, and the user's input to input the channel number comprises selecting at least one of numbers in the number keypad.

6. The display apparatus according to one of claims 1 to 3, wherein the display unit displays the list of channel numbers according to one of a descending order, an ascending order and a date of a channel selection.

7. The display apparatus according to one of claims 1 to 3, wherein the controller displays the selected channel number for a predetermined period, in the list of channel numbers.

8. A control method of a display apparatus, the method comprising:
receiving a user's input to input a channel number; and
displaying a list of channel numbers which have been previously input.

9. The control method according to claim 8, further comprising:
inputting a predetermined channel number; and
adding to the list of channel numbers and displaying the input channel number.

10. The control method according to claim 8, further comprising selecting one of channel numbers displayed in the list of channel numbers.

11. The control method according to one of claims 8 to 10, further comprising displaying a user interface UI comprising a number keypad to input the channel number; and
the user's input to input the channel number comprises selecting at least one of numbers in the number keypad.

12. The control method according to one of claims 8 to 10, wherein the display apparatus comprises a user input unit comprising a number keypad to input the channel number, and the user's input to input the channel number comprises selecting at least one of numbers in the number keypad.

13. The control method according to one of claims 8 to 10, wherein the displaying the list of channel numbers comprises arranging and displaying the list of channel numbers according to one of a descending order, an ascending order and a date of a channel selection.

14. The control method according to one of claims 8 to 10, wherein the displaying the list of channel numbers comprises displaying a selected channel number for a predetermined period, in the list of channel numbers.
